Europäisches Patentamt

European Patent Office

Office européen des brevets

(19)

(11) **EP 0 755 522 B1**

(12) **EUROPÄISCHE PATENTSCHRIFT**

(45) Veröffentlichungstag und Bekanntmachung des Hinweises auf die Patenterteilung:
**01.07.1998 Patentblatt 1998/27**

(21) Anmeldenummer: **95916554.9**

(22) Anmeldetag: **12.04.1995**

(51) Int Cl.⁶: **G01S 5/14**

(86) Internationale Anmeldenummer:
**PCT/DE95/00471**

(87) Internationale Veröffentlichungsnummer:
**WO 95/27909 (19.10.1995 Gazette 1995/45)**

(54) **SATELLITEN-NAVIGATIONSVERFAHREN**

SATELLITE NAVIGATION PROCESS

PROCEDE D'AIDE A LA NAVIGATION PAR SATELLITES

(84) Benannte Vertragsstaaten:
**DE FR GB IT SE**

(30) Priorität: **12.04.1994 DE 4412336**
**08.03.1995 DE 19508208**

(43) Veröffentlichungstag der Anmeldung:
**29.01.1997 Patentblatt 1997/05**

(73) Patentinhaber: **NFS Navigations- und Flugführungs-Systeme GmbH**
**89077 Ulm (DE)**

(72) Erfinder: **GU, Xiaogang**
**D-89155 Erbach (DE)**

(74) Vertreter: **Fröhling, Werner Otto, Dr.**
**Daimler-Benz Aerospace AG**
**Patentabteilung**
**Wörthstrasse 85**
**89077 Ulm (DE)**

(56) Entgegenhaltungen:
**EP-A- 0 574 009**  **EP-A- 0 588 598**

• **BULLETIN GEODESIQUE, 1985, FRANCE, Bd. 59, Nr. 4, ISSN 0007-4632, Seiten 361-377, REMONDI B W 'Global Positioning System carrier phase: description and use'**
• **IEEE 1994 POSITION LOCATION AND NAVIGATION SYMPOSIUM (CAT. NO.94CH3358-9), PROCEEDINGS OF 1994 IEEE POSITION, LOCATION AND NAVIGATION SYMPOSIUM - PLANS'94, LAS VEGAS, NV, USA, 11-15 APRIL 1994, ISBN 0-7803-1435-2, 1994, NEW YORK, NY, USA, IEEE, USA, Seiten 410-417, XIAOGANG GU ET AL 'DGPS positioning using carrier phase for precision navigation'**

**Beschreibung**

Die Erfindung betrifft ein Satelliten-Navigationsverfahren nach dem Oberbegriff des Patentanspruchs 1.

Die Erfindung ist insbesondere anwendbar für die Navigation von Flugzeugen beim Landeanflug.

Für die Navigations, insbesondere die dreidimensionale Navigation, ist die Auswertung dafür geeigneter Satellitensignale möglich. Solche Satelliten sind zu den Navigationssysstemen GPS ("Global Positioning System") sowie GLONASS ("GLobal Orbiting NAvigation Satellite System") zusammengefaßt. GPS und GLONASS bilden das globale Satellitennavigationssystem GNSS ( Global Navigation Satellite System). Die von diesen Satelliten ausgesandten Signale können in Abhängigkeit von der geforderten Genauigkeit in unterschiedlicher Weise ausgewertet werden. Eine Art der Satellitennavigation benutzt die Auswertung der Code- oder Trägerphasenmessungen eines GNSS-Nutzerempfängers, der an Bord eines Fahrzeuges, z. B. eines Luftfahrzeuges, dessen Position bestimmt werden soll, eingebaut ist. Zur Erhöhung der Navigationsgenauigkeit wird die Differentialarbeitsweise (DGNSS) von GNSS verwendet. Dabei wird neben dem Nutzerempfänger ein zweiter Empfänger, der Referenzempfänger genannt wird, auf einer bekannten Position eingesetzt. Dieser ermittelt anhand der bekannten Antennenposition vorhandene Meßfehler und korrigiert die Messungen des Nutzerempfängers.

Bei hochgenauen Navigationen, beispielsweise automatischen Landungen von Flugzeugen, werden aus Sicherheitsgründen Genauigkeiten von Metern oder sogar Dezimetern gefordert. Beispielsweise hat die US-Luftfahrtbehörde FAA (Federal Aviation Administration) aus dem Mikrowellenlandesystem (MLS) Genauigkeitsanforderungen (95%) an Navigationssensoren für Präzisionsanflüge mit GNSS unter den CAT-I/II/III-Sichtbedingungen der International Civil Aviation Organisition (ICAO) abgeleitet, die in folgender Tabelle 1 dargestellt sind.

|  |  | Horizontal | | Vertikal | |
|---|---|---|---|---|---|
|  | DH | PFE | CMN | PFE | CMN |
| CAT I | 200 ft | ± 5,1 m | ± 4,1 m | ± 2,4 m | ± 1,2 m |
| CAT II | 100 ft | ± 4;4 m | ± 3,5 m | ± 1,2 m | ± 0,6 m |
| CAT III | 50 ft | ± 4,0 m | ± 3,2 m | ± 1,2 m | ± 0,6 m |

Dabei wird die in der Luftfahrt übliche Maßeinheit foot (ft) verwendet und es bedeuten :

DH :      Decision Height (Entscheidungshöhe)
PFE :     Path Following Error (niederfrequenter Fehler-Anteil)
CMN :    Control Motion Noise (hochfrequenter Fehler-Anteil)

Bei dem DGNSS-Verfahren (oder DGPS-Verfahren für GPS) können die bei Messungen mit GNSS-Empfängern vorkommenden korrelierten Fehler, beispielsweise Satellitenuhrenfehler, Satellitenbahnmodellfehler, Atmosphärenfehler und Erdrotationseinfluß, durch die Differentialarbeitsweise verringert werden. Weitere Fehler, beispielsweise Rauschen, Mehrwegausbreitungseinflüsse und dynamische Einflüsse, sind jedoch zwischen Messungen von Nutzer- und Referenz-Empfängern unkorreliert. Diese Fehler lassen sich nicht durch eine Differenzenbildung reduzieren.

Diese störenden Einflüsse des Rauschens und der Dynamik auf die Positionsbestimmung liegen bei Codemessungen typischerweise im Meterbereich. Die störenden Mehrwegeinflüsse bei Codemessungen können bei starken Mehrwegereflexionen sogar einen Navigationsfehler größer als 100 m verursachen. Die unkorrelierten Fehler bei den Trägerphasenmessungen bewegen sich dagegen nur im Bereich von Milli- oder Zentimetern und sind im Vergleich zu den entsprechenden Fehlern bei Codemessungen wesentlich geringer. Die Trägerphasenmessung weist im Gegensatz zu der Codemessung jedoch eine Anfangsmehrdeutigkeit auf, die mit der Anzahl der Wellenlängen auf dem Weg der Signalübertragung von einem Satelliten zu einem (Nutzer-und/oder Referenz-)Empfänger zusammenhängt.

Ein bekanntes Verfahren, das die komplementären Verhalten der Code- und Phasenmessung unter der Bezeichnung "carrier smoothed code" (phasengeglätteter Code) kombiniert, [Hatch, R, (1982): "The Synergism of GPS code and carrier measurements", Proceedings: Third International Symposium on Satellite Doppler Positioning, Austin, Texas, April 28 - May 2, vol 2.], kann den Einfluß des Coderauschens auf den Navigationsfehler auf den Zentimeterbereich verringern. Hierbei wird über die Trägerphasenmessung die Empfängerdynamik zwischen zwei Zeitpunkten bestimmt und über die phasengeglättete Codemessung die Phasenmehrdeutigkeiten näherungsweise ermittelt. Dieses Verfahren ist derzeit für Echtzeitanwendungen der GPS-Navigation weit verbreitet. Nachteilig an dem Verfahren ist die relativ große Empfindlichkeit für Mehrwegausbreitungseinflüsse und dynamische Einflüsse aufgrund des immer noch vorhandenen Codemessungsanteils. Die durch dieses Verfahren erreichten Genauigkeiten erfüllen bisher nicht die für Landeanflüge geforderte vertikale Genauigkeit von 1,2 m mit einer Wahrscheinlichkeit von 95% (CAT-III-PFE-Anforderung).

Zum Erreichen der Genauigkeiten mit einer Standardabweichung im Zentimeter- oder unteren Dezimeterbereich wird eine reine Trägerphasenauswertung verwendet. Hierbei müssen die Phasenmehrdeutigkeiten unter dynamischen Bedingungen aufgelöst werden. Es sind Suchverfahren zur Bestimmung der Phasenmehrdeutigkeiten unter kinematischen Bedingungen (bewegtem Empfänger) bekannt, z.B. aus den Literaturstellen Hatch, R., (1990): "Instantaneous Ambiguity Resolution", in: Schwarz KP, Lachapelle G (eds): Kinematic systems in geodesy, surveying and remote sensing. Springer, New York Berlin Heidelberg London Paris Tokyo Hong Kong, 299-308.

Landau, H.; Euler, H. J., (1991): "The Key to Decimeter-Level Differential GPS Navigation: Carrier Phase Ambiguity Determination," Proceedings of the First International Symposium for Real Time Differential Applications of the Global Positioning System, Braunschweig, Sept. 1991, vol 1.

Abidin, H.Z./ Wells, D.E./ Kleusberg, A. (1991) : "Multi-Monitor Station 'On The Fly' Ambiguity Resolution. Proceedings: First International Symposium for Real Time Differential Applications of the Global Positioning System, Braunschweig, Sept., vol 1.

Remondi, B.W. (1991) : "Kinematic GPS Results without Static Initialization", NOAA Technical Memorandum, NOS NGS-55, Rockville, MD.

Derartige Suchverfahren haben insbesondere den Nachteil, daß eine Vorgabe eines Suchraumes erforderlich ist. Wird dieser groß gewählt, um mit Sicherheit die Lösung im Suchraum zu haben, entsteht ein hoher Rechenzeitbedarf. Beispielsweise können für einen kugelförmigen Suchraum mit einem Radius von drei Metern bei Trägerphasenmessungen mittels vier Satelliten, selbst ohne Berücksichtigung von Rauschen, maximal 32768 potentielle Lösungen existieren. Ein solches Suchverfahren erfordert einen großen technischen Aufwand und erschwert dessen Echtzeiteinsatz. Wird zur Vermeidung dieses Nachteils lediglich ein kleiner Suchraum vorgegeben, so besteht nachteiligerweise die Möglichkeit, daß die gesuchte Lösung außerhalb des Suchraums liegt und daher nicht ermittelt werden kann.

Weiterhin können in dem Suchraum in nachteiliger Weise neben einem gesuchten globalen Hauptminimum mehrere Nebenminima vorhanden sein. Es besteht dann die Möglichkeit, daß ein Suchvorgang auf ein solches Nebenminimum einrastet und somit eine falsche Lösung liefert.

Aus dem Dokument BULLETIN GEODESIQUE, 1985, FRANCE, Bd. 59, Nr. 4, ISSN 0007-4632, Seiten 361-377, REMONDI B W, "Global Positioning System carrier phase: description and use", ist weiterhin ein Navigationsverfahren mittels des Global Positioning Systems (GPS) bekannt Dabei wird in einem GPS-Empfänger die im GPS-Signal enthaltene Modulation entfernt, so daß ein reines Trägersignal entsteht. Damit erfolgt eine Positionsbestimmung eines bewegten GPS-Empfängers, wobei diesem eine Trägerphasenmessung durchgeführt wird und außerdem sogenannte Triple-Differenzen gebildet werden. Bei dieser Positionsbestimmung wird von einer bekannten Ausgangsposition des bewegten GPS-Empfängers ausgegangen.

Der Erfindung liegt die Aufgabe zugrunde, ein gattungsgemäßes Verfahren anzugeben, das eine zuverlässige, echtzeitfähige sowie hochgenaue Positionsbestimmung eines bewegten Empfängers ermöglicht, insbesondere bei einem Landeanflug eines Flugzeuges.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen entnehmbar.

Ein erster Vorteil der Erfindung besteht darin, daß die Navigationsgenauigkeiten durch Auswertung reiner Trägerphasen der Satellitensignale den unteren Dezimeterbereich erreichen und somit die Genauigkeitsanforderungen der Präzisionsanflüge bis zu CAT-III - Bedingungen erfüllen.

Ein zweiter Vorteil besteht darin, daß das Navigationsverfahren eine analytische Trägerphasenauswertung verwendet und somit eine eindeutige, zuverlässige Navigationslösung zu jedem Zeitpunkt liefert.

Ein dritter Vorteil besteht darin, daß das Navigationsverfahren aufgrund der reinen Trägerphasenauswertung während der Bewegung, z.B. während eines Landeanflugs eingeschaltet werden darf und dann nach einer kurzen Anlaufzeit die hochgenaue Navigation ermöglicht.

Ein vierter Vorteil besteht darin, daß der technische Aufwand sowie der Rechenaufwand für die Navigationslösung so klein sind, daß das Navigationsverfahren bei einer Flugzeugnavigation echtzeitfähig ist und daß ein diesbezügliches räumlich kleines, mechanisch kompaktes und zuverlässiges Gerät herstellbar ist.

Ein fünfter Vorteil besteht darin, daß das Auswerteverfahren auch die zukünftige Satellitenkonstellation von GNSS (operationeller Konstellation von GPS und GLONASS) berücksichtigt.

Weitere Vorteile ergeben sich aus der nachfolgenden Beschreibung.

Die Erfindung beruht auf den Trägerphasenmessungen der von GPS- und/oder GLONASS- und/oder Pseudo-Satelliten ausgesandten Signale. Pseudo-Satelliten, z.B. mehrere Bodenstationen, senden GNSS-Signale aus und besitzen eine bekannte Position. Bei der hochgenauen Navigation eines Flugzeuges, insbesondere bei einem Landeanflug, ist neben einem GNSS-Bordempfänger mindestens ein GNSS-Empfänger in einer ortsfesten Referenzstation zur Trägerphasenmessung erforderlich sowie eine Datenverbindung (Data-Link), z.B. eine Funkverbindung, mit welcher die in der Referenzstation ermittelten Trägerphasenkorrekturen an den GNSS-Bordempfänger übertragen werden.

Bei der Erfindung wird eine Auswertung der Trägerphasenmessungen der GNSS-Satellitensignale gemäß folgen-

der Formel verwendet.

$$\phi_E^S = (1/\lambda)\cdot(R_E^S + \Delta R^S + \Delta R_E + \varepsilon_E^S) + N_E^S \qquad (1)$$

mit

$\phi_E^S$    gemessene Trägerphase;
$\lambda$    Wellenlänge des ausgesandten GNSS-Trägersignals;
$R_E^S$    Geometrische Entfernung vom Satelliten zum Empfänger;
$\Delta R^S$    zwischen Satelliten korrelierte Fehler, z.B. Empfängeruhrenfehler;
$\Delta R_E$    zwischen Empfängern korrelierte Fehler, z.B. Fehler von Ephemeridenparametern und Satellitenuhren sowie der Ionos- und Troposphäre;
$\varepsilon_E^S$    Fehler wie Mehrwegausbreitungseinflüsse, Dynamik einflüsse und Rauschen;
$N_E^S$    Phasenmehrdeutigkeit zu einem Anfangszeitpunkt $t_0$.

Dabei bezeichnet der (tiefgestellte) Index E die Abhängigkeit von dem Empfänger und die (hochgestellte) Superscript S die Abhängigkeit von einem Satelliten.

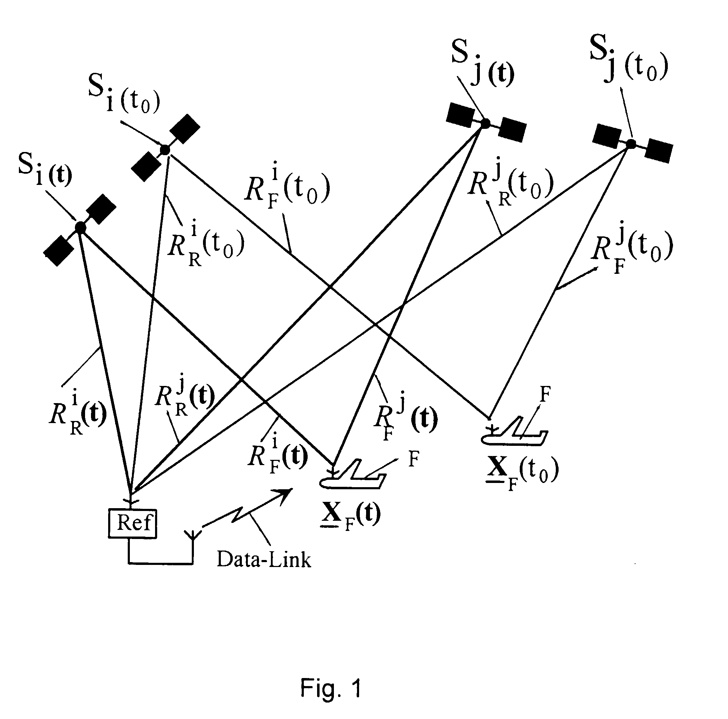

Bei der Erfindung, die auch TD6U-Verfahren (Triple-Differenz GPS mit 6 Unbekannten) genannt wird, erfolgt eine Bildung einer sogenannten Dreifachdifferenz (Triple-Differenz) der Trägerphasenmessungen zwischen zwei Empfängern F (Flugzeug), Ref (ortsfeste Referenzstation), zwei Satelliten $S_i$, $S_j$, wobei i,j ganze Zahlen sind, und zwei Zeitpunkten $t_0$, t (Fig.1), wobei t größer $t_0$ ist, gemäß folgender Formel:

$$\delta\nabla\Delta\phi = \left\{\left[\phi_F^i(t) - \phi_R^i(t)\right] - \left[\phi_F^j(t) - \phi_R^j(t)\right]\right\} - \left\{\left[\phi_F^i(t_0) - \phi_R^i(t_0)\right]\right.$$
$$\left. - \left[\phi_F^j(t_0) - \phi_R^j(t_0)\right]\right\} \qquad (2)$$

Diese Formel entspricht der Schreibweise, die in der GPS-Literatur derzeit üblich ist. Dabei bedeutet

$\Delta$    die in eckigen Klammern dargestellte Differenz
$\nabla$    die in geschweiften Klammern dargestellte Differenz
$\delta$    die Differenz zwischen den geschweiften Klammern

$\phi_R^i(t)$      die zum Zeitpunkt t an der Referenzstation Ref gemessene Trägerphase des Satelliten $S_i$,

$\phi_F^i(t)$      die zum Zeitpunkt t an dem Flugzeug F gemessene Trägerphase des Satelliten $S_i$,

$\phi_R^j(t)$      die zum Zeitpunkt t an der Referenzstation Ref gemessene Trägerphase des Satelliten $S_j$,

$\phi_F^j(t)$      die zum Zeitpunkt t an dem Flugzeug F gemessene Trägerphase des Satelliten $S_j$,

$\phi_R^i(t_0)$      die zum Zeitpunkt $t_0$ an der Referenzstation Ref gemessene Trägerphase des Satelliten $S_i$,

$\phi_F^i(t_0)$      die zum Zeitpunkt $t_0$ an dem Flugzeug F gemessene Trägerphase des Satelliten $S_i$,

$\phi_R^j(t_0)$      die zum Zeitpunkt $t_0$ an der Referenzstation Ref gemessene Trägerphase des Satelliten $S_j$,

$\phi_F^j(t_0)$      die zum Zeitpunkt $t_0$ an dem Flugzeug F gemessene Trägerphase des Satelliten $S_j$.

Die in eckigen Klammern [] dargestellte Differenz wird Einfachdifferenz genannt; die Differenz in geschweiften Klammern {} heißt Zweifachdifferenz und die Differenz zwischen den geschweiften Klammern wird Dreifachdifferenz (Triple-Differenz) genannt.

Aus den Formeln (1) und (2) folgt

$$R^i_F(t) - R^j_F(t) - R^i_F(t_0) + R^j_F(t_0) = \lambda\,\delta\nabla\Delta\phi + R^i_R(t) - R^j_R(t) - R^i_R(t_0) + R^j_R(t_0)$$

$$-\left[\varepsilon^i_F(t) - \varepsilon^i_R(t) - \varepsilon^j_F(t) + \varepsilon^j_R(t) - \varepsilon^i_F(t_0) + \varepsilon^i_R(t_0) + \varepsilon^j_F(t_0) - \varepsilon^j_R(t_0)\right] \qquad (3)$$

mit

$$\varepsilon^S_E(\tau)\ (S = i,j\ E = R, F\ \tau = t,\ t_0)$$

als Fehler einer von Satelliten, Empfänger und Zeitpunkt abhängigen Beobachtung.

Bei der Dreifachdifferenz werden vorteilhafterweise die zwischen Empfängern korrelierten Fehler $\Delta R_E$, die zwischen Satelliten korrelierten Fehler $\Delta R^S$ und die zeitunabhängigen Phasenmehrdeutigkeiten $N^S_E$ eliminiert. Die einzige Bedingung für die Beseitigung der Phasenmehrdeutigkeiten ist eine kontinuierliche Trägerphasenmessung ohne Phasensprünge (cycle slips) zwischen den zwei Zeitpunkten t, $t_0$. Die verbleibenden unkorrelierten Fehler, die Terme in der eckigen Klammer von der Formel (3), sind die Einflüsse der Flugzeugdynamik, die Mehrwegausbreitungseinflüsse und das Rauschen bei der Trägerphasenmessung. Diese verbleibenden Fehler liegen jedoch nach der Tripledifferenzenbildung im Milli- oder Zentimeterbereich.

Zur Reduzierung der zu übertragenden Daten von der Referenzstation Ref zum Nutzerempfänger werden statt der rohen Trägerphasen von Ref die Korrekturwerte der Trägerphasen übermittelt. Ein Korrekturwert der Trägerphase wird ermittelt, indem man die gemessene integrierte Dopplerverschiebung mit der mittels der bekannten Referenzposition und der Satellitentrajektorie berechneten integrierten Dopplerverschiebung vergleicht, gemäß der Formel:

$$\phi_{Korr}(t) = [R^i_R(t) - R^i_R(t_{Anf})] - \lambda[\phi^i_R(t) - \phi^i_R(t_{Anf})] \qquad (4)$$

wobei $t_{Anf}$ sich auf einen Anfangszeitpunkt an der Referenzstation bezieht und i eine Größe in Abhängigkeit mit einem beliebigen empfangenen Satelliten bezeichnet. Die Differenz in der ersten eckigen Klammer beschreibt die erwartete Dopplerverschiebung und die Differenz in der zweiten eckigen Klammer die gemessene integrierte Dopplerverschiebung. Ist der Zeitpunkt $t_0$ in der Formel (3) größer als $t_{Anf}$ stimmt die Differenz $\phi_{Korr}(t)$-$\phi_{Korr}(t_0)$ mit der zeitlichen Differenz der Referenzgrößen in der Formel (3) überein.

Die aufzulösenden Unbekannten sind in den auf den Bordempfänger bezogenen Entfernungsgrößen auf der linken Seite der Formel (3) enthalten

$$F(t, t_0, i, j) = R^j_F(t) - R^j_F(t) - R^j_F(t_0) + R^j_F(t_0).$$

Die Unbekannten sind die Positionen des Bordempfängers zu den Zeitpunkten $t$ und $t_0$ $(X_B(t), Y_B(t), Z_B(t), X_B(t_0), Y_B(t_0), Z_B(t_0))$.

Die Lösung dieser Unbekannten erfolgt anhand einer analytischen Methode, beispielsweise nach einem Verfahren der linearen Schätztheorie, zum Beispiel der Methode der kleinsten Quadrate oder der Kalmanfilterung, mit den um einen Schätzpunkt linearisierten Tripledifferenzengleichungen. Mit einem Schätzpunkt $(X^*_F(t), Y^*_F(t), Z^*_F(t), X^*_F(t_0), Y^*_F(t_0), Z^*_F(t_0))$ erhält man

$$X_F(t) = X^*_F(t) + dX_F, \qquad Y_F(t) = Y^*_F(t) + dY_F, \qquad Z_F(t) = Z^*_F(t) + dZ_F$$

$$X_F(t_0) = X^*_F(t_0) + dX_F, \qquad Y_F(t_0) = Y^*_F(t_0) + dY_F, \qquad Z_F(t_0) = Z^*_F(t_0) + dZ_F$$

und

$$R^{i*}_F(t) = \sqrt{(X^*_F(t) - X^i(t))^2 + (Y^*_F(t) - Y^i(t))^2 + (Z^*_F(t) - Z^i(t))^2}$$

$$R_F^{j^*}(t) = \sqrt{(X_F^*(t) - X^j(t))^2 + (Y_F^*(t) - Y^j(t))^2 + (Z_F^*(t) - Z^j(t))^2}$$

$$R_F^{i^*}(t_0) = \sqrt{(X_F^*(t_0) - X^i(t_0))^2 + (Y_F^*(t_0) - Y^j(t_0))^2 + (Z_F^*(t_0) - Z^i(t_0))^2}$$

$$R_F^{j^*}(t_0) = \sqrt{(X_F^*(t_0) - X^j(t_0))^2 + (Y_F^*(t_0) - Y^j(t_0))^2 + (Z_F^*(t_0) - Z^j(t_0))^2}.$$

wobei die Superscripte i und j die Gröpen der Satelliten $S_i$ und $S_j$ kennzeichnen.
Um den Schätzpunkt wird die Formel (3) linearisiert zu

$$\frac{\partial F(t, t_0, i, j)}{\partial X_F(t)} \Delta X_F(t) + \frac{\partial F(t, t_0, i, j)}{\partial Y_F(t)} \Delta Y_F(t) + \frac{\partial F(t, t_0, i, j)}{\partial Z_F(t)} \Delta Z_F(t)$$

$$+ \frac{\partial F(t, t_0, i, j)}{\partial X_F(t_0)} \Delta X_F(t_0) + \frac{\partial F(t, t_0, i, j)}{\partial Y_F(t_0)} \Delta Y_F(t_0) + \frac{\partial F(t, t_0, i, j)}{\partial Z_F(t_0)} \Delta Z_F(t_0) =$$

$$\lambda \ \delta\nabla\Delta\phi + R_R^i(t) - R_R^j(t) - R_R^i(t_0) + R_R^j(t_0) - R_F^{i^*}(t) + R_F^{j^*}(t) + R_F^{i^*}(t_0) - R_F^{j^*}(t_0)$$

$$-\varepsilon_F^i(t) + \varepsilon_R^i(t) + \varepsilon_F^j(t) - \varepsilon_R^j(t) + \varepsilon_F^i(t_0) - \varepsilon_R^i(t_0) - \varepsilon_F^j(t_0) + \varepsilon_R^j(t_0) \qquad (6)$$

wobei

$$\frac{\partial F(t, t_0, i, j)}{\partial X_F(t)} = \frac{\partial R_F^i(t)}{\partial X_F(t)} - \frac{\partial R_F^j(t)}{\partial X_F(t)}$$

$$= \frac{\partial \sqrt{(X_F(t) - X^i(t))^2 + (Y_F(t) - Y^i(t))^2 + (Z_F(t) - Z^i(t))^2}}{\partial X_F(t)}$$

$$\frac{\partial \sqrt{(X_F(t) - X^j(t))^2 + (Y_F(t) - Y^j(t))^2 + (Z_F(t) - Z^j(t))^2}}{\partial X_F(t)}$$

$$= \frac{X_F^*(t) - X^i(t)}{R_F^{i^*}(t)} - \frac{X_F^*(t) - X^j(t)}{R_F^{j^*}(t)} \qquad (7a)$$

und analog zu (7a)

$$\frac{\partial F(t, t_0, i, j)}{\partial Y_F(t)} = \frac{Y_F^*(t) - Y^i(t)}{R_F^{i^*}(t)} - \frac{Y_F^*(t) - Y^j(t)}{R_F^{j^*}(t)} \qquad (7b)$$

$$\frac{\partial F(t, t_0, i, j)}{\partial Z_F(t)} = \frac{Z_F^*(t) - Z^i(t)}{R_F^{i^*}(t)} - \frac{Z_F^*(t) - Z^j(t)}{R_F^{j^*}(t)} \qquad (7c)$$

$$\frac{\partial F(t, t_0, i, j)}{\partial X_F(t_0)} = \frac{X_F^*(t_0) - X^i(t_0)}{R_F^{i^*}(t_0)} - \frac{X_F^*(t_0) - X^j(t_0)}{R_F^{j^*}(t_0)} \qquad (7d)$$

$$\frac{\partial F(t,t_0,i,j)}{\partial Y_F(t_0)} = \frac{Y_F^*(t_0) - Y^i(t_0)}{R_F^{i*}(t_0)} - \frac{Y_F^*(t_0) - Y^j(t_0)}{R_F^{j*}(t_0)} \tag{7e}$$

$$\frac{\partial F(t,t_0,i,j)}{\partial Z_F(t_0)} = \frac{Z_F^*(t_0) - Z^i(t_0)}{R_F^{i*}(t_0)} - \frac{Z_F^*(t_0) - Z^j(t_0)}{R_F^{j*}(t_0)}. \tag{7f}$$

Die Position des Nutzerempfängers läßt sich mit n Satelliten (n > 6) darstellen gemäß der Formel :

$$\underline{A}\,\underline{X} = \lambda\left[\underline{D}\underline{\phi}_F(t) - \underline{D}\underline{\phi}_F(t_0)\right] - \lambda\left[\underline{D}\underline{\phi}_R(t) - \underline{D}\underline{\phi}_R(t_0)\right]$$
$$+\left[\underline{D}R_R(t) - \underline{D}R_R(t_0)\right] - \left[\underline{D}R_F^*(t) - \underline{D}R_F^*(t_0)\right]$$
$$+\left[\underline{D}\underline{\varepsilon}_R(t) - \underline{D}\underline{\varepsilon}_R(t_0)\right] - \left[\underline{D}\underline{\varepsilon}_F(t) - \underline{D}\underline{\varepsilon}_F(t_0)\right] \tag{8}$$

wobei

$$\underline{X} = \left[\Delta X_F(t), \Delta Y_F(t), \Delta Z_F(t), \Delta X_F(t_0), \Delta Y_F(t_0), \Delta Z_F(t_0)\right]^T$$

Zustandsvektor

$$\underline{\phi}_R(t) = \left[\phi_R^1(t), \phi_R^2(t), \ldots, \phi_R^n(t)\right]^T$$

Vektor der Meßphasen des Referenzempfängers zum Zeitpunkt t

$$\underline{\phi}_R(t_0) = \left[\phi_R^1(t_0), \phi_R^2(t_0), \ldots, \phi_R^n(t_0)\right]^T$$

Vektor der Meßphasen des Referenzempfängers zum Anfangszeitpunkt $t_0$

$$\underline{\phi}_F(t) = \left[\phi_F^1(t), \phi_F^2(t), \ldots, \phi_F^n(t)\right]^T$$

Vektor der Meßphasen des Nutzerempfängers zum Zeitpunkt t

$$\underline{\phi}_F(t_0) = \left[\phi_F^1(t_0), \phi_F^2(t_0), \ldots, \phi_F^n(t_0)\right]^T$$

Vektor der Meßphasen des Nutzerempfängers zum Anfangszeitpunkt $t_0$

$$\underline{R}_R(t) = \left[R_R^1(t), R_R^2(t), \ldots, R_R^n(t)\right]^T$$

Entfernungsvektor vom Referenzempfänger zu den Satelliten zu t

$$\underline{R}_R(t_0) = \left[ R_R^1(t_0), R_R^2(t_0), \ldots, R_R^n(t_0) \right]^T$$

Entfernungsvektor vom Referenzempfänger zu den Satelliten zu $t_0$

$$\underline{R}_F^\bullet(t) = \left[ R_F^{1\,\bullet}(t), R_F^{2\,\bullet}(t), \ldots, R_F^{n\,\bullet}(t) \right]^T$$

Entfernungsvektor der geschätzten Nutzerempfängerposition zu den Satelliten zu t

$$\underline{R}_F^\bullet(t_0) = \left[ R_F^{1\,\bullet}(t_0), R_F^{2\,\bullet}(t_0), \ldots, R_F^{n\,\bullet}(t_0) \right]^T$$

Entfernungsvektor der geschätzten Nutzerempfängerposition zu den Satelliten zu $t_0$

$$\underline{\varepsilon}_R(t) = \left[ \varepsilon_R^1(t), \varepsilon_R^2(t), \ldots, \varepsilon_R^n(t) \right]^T$$

Vektor der Restfehler des Referenzempfängers zu t

$$\underline{\varepsilon}_R(t_0) = \left[ \varepsilon_R^1(t_0), \varepsilon_R^2(t_0), \ldots, \varepsilon_R^n(t_0) \right]^T$$

Vektor der Restfehler des Referenzempfängers zu $t_0$

$$\underline{\varepsilon}_F(t) = \left[ \varepsilon_F^1(t), \varepsilon_F^2(t), \ldots, \varepsilon_F^n(t) \right]^T$$

Vektor der Restfehler des Nutzerempfängers zu t

$$\underline{\varepsilon}_F(t_0) = \left[ \varepsilon_F^1(t_0), \varepsilon_F^2(t_0), \ldots, \varepsilon_F^n(t_0) \right]^T$$

Vektor der Fehler des Nutzerempfängers zu $t_0$

$$\underline{A} = \begin{bmatrix} a_{11} & a_{12} & \cdots\cdots & a_{16} \\ a_{21} & a_{22} & \cdots\cdots & a_{26} \\ & & \cdot & \\ & & \cdot & \\ & & \cdot & \\ a_{m1} & a_{m2} & \cdots\cdots & a_{m6} \end{bmatrix},$$

Geometrie-Matrix mit den Elementen nach der Formel (7)

$$\underline{D} = \begin{bmatrix} -1 & 1 & 0 & . & . & . & 0 \\ -1 & 0 & 1 & . & . & . & 0 \\ . & & & . & & & \\ . & & & & . & & \\ . & & & & & . & \\ -1 & & & & & & 1 \end{bmatrix}$$

Differenzenmatrix.

Aus der Formel (8) sind die Positionen des Nutzerempfängers zu den Zeitpunkten t und $t_0$ bestimmbar, beispielsweise nach der Methode der kleinsten Quadrate gemäß der Formel:

$$\hat{\underline{X}} = (\underline{A}^T \underline{A})^{-1} \underline{A}^T \underline{Z} \qquad (9)$$

mit

$$\hat{\underline{X}} = \left[ \Delta X_F(t), \Delta Y_F(t), \Delta Z_F(t), \Delta X_F(t_0), \Delta Y_F(t_0), \Delta Z_F(t_0) \right]^T$$

Vektor mit den Abweichungen zu einem Schätzpunkt

$$\left[ X_F^{\bullet}(t), Y_F^{\bullet}(t), Z_F^{\bullet}(t), X_F^{\bullet}(t_0), Y_F^{\bullet}(t_0), Z_F^{\bullet}(t_0) \right]^T$$

$$\underline{Z} = \lambda \left[ \underline{D}\underline{\phi}_F(t) - \underline{D}\underline{\phi}_F(t_0) \right] - \lambda \left[ \underline{D}\underline{\phi}_R(t) - \underline{D}\underline{\phi}_R(t_0) \right]$$
$$+ \left[ \underline{D}R_R(t) - \underline{D}R_R(t_0) \right] - \left[ \underline{D}R_F^{\bullet}(t) - \underline{D}R_F^{\bullet}(t_0) \right]$$

FIG. 1 veranschaulicht mit einer Flugzeugnavigation als Beispiel die Bildung dieser Dreifachdifferenzen. Der Nutzerempfänger an Bord eines Flugzeugs F und der Referenzempfänger in einer ortsfesten Referenzstation Ref empfangen fortlaufend die Signale von zwei Satelliten $S_i$ und $S_j$. Zu einem Zeitpunkt $t_0$ befinden sich die Satelliten $S_i$, $S_j$ und das Flugzeug F in den Anfangspositionen $S_i(t_0)$, $S_j(t_0)$ und $\underline{X}_F(t_0)$. Der Anfangszeitpunkt $t_0$ kann ein beliebiger Zeitpunkt, z.B. ein Zeitpunkt kurz vor der Landung sein. Die Positionen der Satelliten $S_i$ und $S_j$ zu den Zeitpunkten $t_0$ und t sind bekannt, ebenso die Position der ortsfesten Referenzstation Ref. Die an der Referenzstation ermittelten Trägerphasenkorrekturen werden durch den Data-Link, z.B. einen Daten- oder Sprechfunkkanal, zum Flugzeug F übertragen. An Bord des Flugzeugs F werden aus den an Bord gemessenen Trägerphasen und den übertragenen Trägerphasenkorrekturen die Tripledifferenzengleichungen gebildet.

Statt die Phasenmehrdeutigkeiten als Unbekannte wie bei einem Suchverfahren zu bestimmen, werden bei dem TD6U-Verfahren nur die Positionen des Bordempfängers zu den zwei Zeitpunkten (sechs unbekannte Koordinatengrößen) in den Tripledifferenzengleichungen analytisch bestimmt. Da jede Satellitenpaarung eine Tripledifferenzgleichung liefert, werden zur Bestimmung der sechs Unbekannten mindestens sieben Satellitenmessungen benötigt.

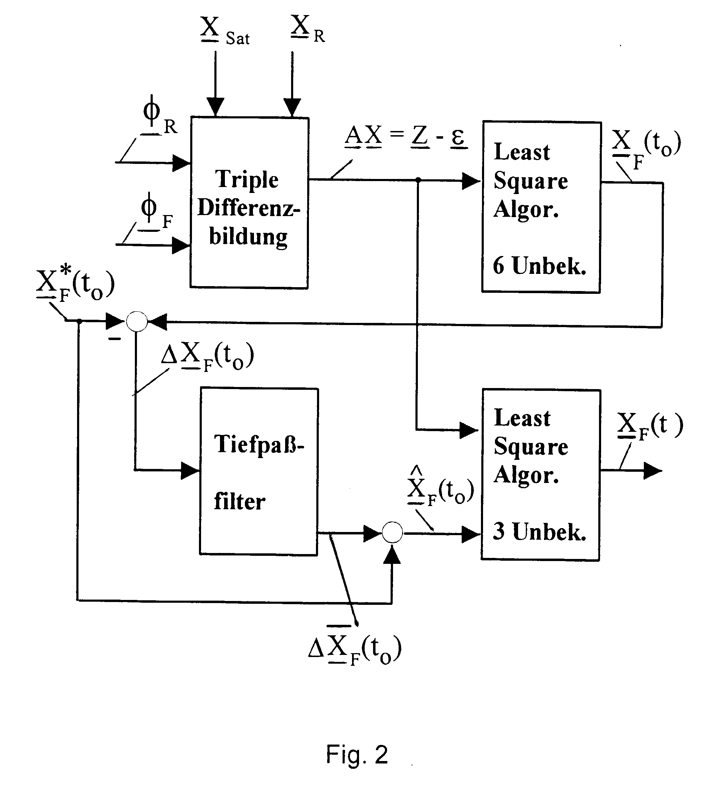

FIG. 2 zeigt ein schematisch dargestelltes Blockschaltbild zur Ermittlung der drei Koordinaten, welche die aktuelle Position $\underline{X}_F(t)$ des Flugzeugs F bzw. die Navigationsgrößen bestimmen. Hierbei werden zunächst die sechs Unbekannten (Koordinaten zu dem Anfangszeitpunkt $t_0$ und dem aktuellen Zeitpunkt t) mit ausreichenden Tripledifferenzengleichungen durch eine analytische Methode bestimmt, beispielsweise durch die Methode der kleinsten Quadrate, die auch als Least-Square- Algorithmus (LSQ) bezeichnet wird. Von den sechs Unbekannten werden nur die Koordinatengrößen der aktuellen Position zur Navigation verwendet. Die Koordinatengrößen der Anfangsposition (zum Zeitpunkt $t_0$) werden nicht direkt benutzt. Die Anfangsposition in den Positionslösungen ist unbekannt aber zeitlich unverändert, so daß diese Position bei den Lösungen vorteilhafterweise statistisch ausgewertet werden kann. Diese Eigenschaft wird ausgenutzt, um mittels eines Filters, vorzugsweise eines Tiefpaßfilters, den Rauschanteils bei der Bestimmung der Anfangsposition zu verringern.

Durch das Tiefpaßfilter werden die durch die erste LSQ-Lösungen mit sechs Unbekannten ermittelten Werte der Anfangsposition $\underline{X}_F(t_0)$ geglättet. Um den Einschwingvorgang bei dem Filter zu verkürzen, nimmt das Filter nur die Differenz gegenüber einer geschätzten Anfangsposition an. Die gefilterte Anfangsposition $\underline{X}_F(t_0)$ wird zur Bestimmung der unbekannten aktuellen Position $\underline{X}_F(t)$ wieder in die Tripledifferenzengleichungen eingesetzt. Bei der zweiten LSQ-Lösung werden jedoch die drei Koordinatengrößen der tiefpaßgefilterten Anfangsposition nicht mehr als Unbekannte betrachtet, sondern lediglich die drei Koordinaten der aktuellen Position.

Der Vorteil dieses Verfahrens besteht darin, daß der geometrische Einfluß bei der zweiten LSQ-Lösung mit drei Unbekannten wesentlich kleiner ist als bei der ersten LSQ-Lösung mit sechs Unbekannten. Der Einfluß der Geometrie bei der ersten LSQ-Lösung ist aufgrund der zeitlichen Differenz bei den Tripledifferenzengleichungen von dem zeitlichen Abstand zwischen dem Anfangszeitpunkt $t_0$ und dem aktuellen Zeitpunkt t stark abhängig und verhält sich wie eine $e^{-t/T}$-Funktion mit einer Zeitkonstanten T, die im Bereich von einigen Minuten liegt. Bei kleinen Zeitspannen zwischen t und $t_0$ kann der Faktor zwischen dem Positionsfehler (1 σ) und dem Entfernungsfehler (1 σ), der sogenannte PDOP (Position Dilution of Precision), bei der ersten LSQ-Lösung, mit sechs Unbekannten, größer als 100 sein, während die PDOP bei der zweiten LSQ-Lösung, mit drei Unbekannten, typischerweise weniger als 3 ist. Folglich haben alle Restfehler der Tripledifferenzengleichungen bei der zweiten LSQ-Lösung bis auf den Schätzfehler der Anfangsposition weniger Einflüsse auf die Positionierungsgenauigkeit.

Ein weiterer Vorteil dieses Filterverfahrens ergibt sich aus der klaren Trennung zwischen der Anfangsposition und der aktuellen Position. Da die aktuelle Position in der Navigation ungefiltert ist, beeinflupt die Filterung der Anfangsposition nicht das dynamische Verhalten der Navigation, das heißt, es ist eine Echtzeit-Navigation möglich.

Bei dem TD6U-Verfahren sind mindestens sechs simultane Beobachtungsgleichungen zur Lösung von sechs Unbekannten erforderlich. Dies erfodet, wie bereits erwähnt, Trägerphasenmessungen mittels mindestens sieben Satelliten. Selbst die volle GPS-Konstellation mit 24 Satelliten kann nur eine Bedeckung von vier Satelliten für nahezu 100% erreichen. Die zur Zeit für den Präzisionsanflug noch fehlende erforderliche Verfügbarkeit (z.B. >98% bei CAT-I) kann jedoch durch das russische Satellitennavigationssystem GLONASS oder Pseudo-Satelliten (Bodenstationen, die GNSS-Signale aussenden) ergänzt werden. Nach dem vollständigen Systemaufbau des GLONASS sind zu jeder Zeit an jedem Ort der Erde mit einem kombinierten GPS/GLONASS-System mindestens acht Satelliten sichtbar, so daß deren GNSS-Signale empfangen werden können. Die erforderliche Satellitenverfügbarkeit kann ebenfalls durch Unterstützung von drei Pseudo-Satelliten, vorzugsweise in der Nähe einer Landebahn, gewährleistet werden. Neben der Kombination mit weiteren Satelliten läßt sich dieses Verfahren auch ohne zusätzliche Satelliten in Kombination mit mehr als einer Bodenstation einsetzen. Da das Verfahren mit jeder Referenzstation durch die GPS-Satellitenkonstellation mindestens vier Satelliten bzw. drei Tripledifferenzengleichungen erhält, ist das Verfahren mittels zwei Referenzstationen, bei denen mindestens sechs unabhängige Gleichungen zu gewinnen sind, nur mit GPS allein ebenfalls einsetzbar. Darüber hinaus kann das Verfahren aufgrund seiner Echtzeitfähigkeit auch derzeit auf anderen kinematischen Echtzeitanwendungen eingesetzt werden, wo keine durchgehende Verfügbarkeit der Satelliten verlangt wird.

Durch experimentelle Versuche mit unabhängigen Referenzsystemen wurde das erfindungsgemäße TD6U-Verfahren geprüft. Die Auswertungen der aufgezeichneten Meßdaten wurden aus Sicherheitsgründen unter einer pseudo-Echtzeitbedingung durchgeführt, d.h., die gemessenen TD6U-Daten wurden an einer Schnittstelle von einem Datenspeicher (File) in eine Auswerteeinheit eingespeist. Bei der Auswertung wurden lediglich die bis zur Eingabe verfügbaren Daten verwendet.

Die erste Prüfung wurde durch eine DGPS-Standmessung auf zwei Vermessungspunkten durchgeführt. Die Antennen von zwei GPS-Empfängern wurden auf den zwei Vermessungspunkten aufgestellt, wobei der erste GPS-Empfänger als Referenzstation und der zweite als "Mobilstation" (Nutzerempfänger) genommen wurden.

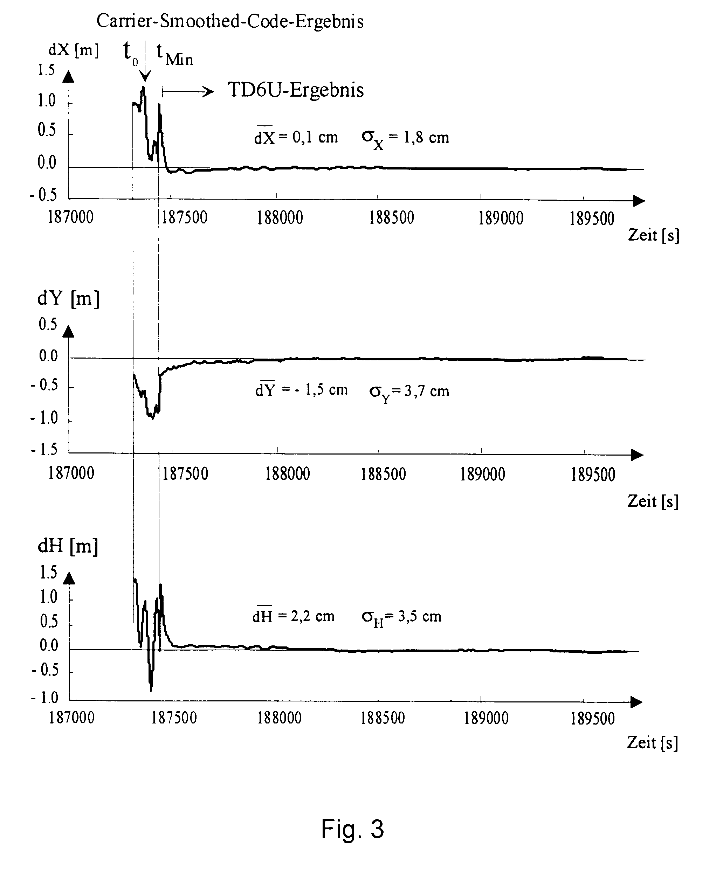

FIG. 3 zeigt die Auswertungsergebnisse mit dem TD6U-Verfahren. Bei der Auswertung wird die "Mobilstation" als unbekannt und beweglich betrachtet. Ab dem Zeitpunkt $t_0$ werden Signale von acht Satelliten mit Elevationswinkeln größer als 7 Grad von den Referenz- und "Mobil"- Empfängern empfangen, so daß ausreichende Satellitenmessungen für die TD6U-Lösung zur Verfügung stehen. Der Zeitpunkt $t_0$ wird als Anfangszeitpunkt für die TD6U-Lösung bezeichnet. Da die Geometrie bzw. PDOP der Tripledifferenzengleichungen mit sechs Unbekannten bei kleiner Zeitspanne ungünstig ist, werden lediglich die Meßwerte zum Anfangszeitpunkt $t_0$ registriert und erst zwei Minuten später zum Zeitpunkt $t_{Min}$ gestartet. In dem Intervall von $t_0$ bis zu $t_{Min}$ wird die Auswertung mit dem erwähnten "carrier smoothed code" durchgeführt. Die maximale Abweichung der gemessenen Position des "Mobil"-Empfängers von der tatsächlichen, hochgenau ermittelten Position während dieser Phase ist ungefähr 1,5 m. Ab dem Zeitpunkt $t_{Min}$ wird das erfindungsgemäße Verfahren (TD6U-Lösung) von einer durch den Carrier-Smoothed-Code geschätzten Anfangsposition ($\underline{X}_F^*(t_0)$ in FIG. 2) ausgehend gestartet. Die Genauigkeit dieser Schätzung liegt im allgemeinen in einem Bereich von Metern. Ein großer Schätzfehler, z.B. von 100m, kann den Einschwingvorgang, jedoch nicht die Stabilität und den Endwert beeinträchtigen. Mit einer Filterzeitkonstante von 15 Sekunden werden die durch die erste LSQ-Lösungen mit sechs Unbekannten ermittelten Werte der Anfangsposition (siehe FIG. 2) tiefpaßgefiltet. Der Schätzfehler wird somit nach den ersten 30 Sekunden um ca. 80% abgebaut. Nach diesem kurzen Einschwingvorgang fallen die Fehlerkomponenten der gefilterten Anfangsposition in allen Richtungen unter einen Fehlerwert von 25 cm. Aufgrund des Zeitverhaltens der PDOP-Änderung (wie eine $e^{-t/T}$-Funktion mit einer Zeitkonstanten T von ungefähr 3 Minuten) haben die Verläufe (Einschwingvorgänge) der Positionsabweichungen etwa 10 Minuten (3T) gedauert, bis die Positionsgenauigkeit zu einem Fehler kleiner als fünf Zentimetern konvergiert. Langwellige Restfehler der Trägerphasendifferenzen wie niederfrequente Mehrwegausbreitungseinflüsse können, wie bereits erwähnt, die TD6U-Genauigkeiten in nachteiliger Weise beeinträchtigen. Die durch die Mehrwegausbreitung verursachten Fehler in den Trägerphasenmessungen liegen im Milli- oder Zentimeterbereich. Obwohl die Meßumgebung hier nicht als günstig bezeichnet werden kann, bleibt der Einfluß der langwelligen Restfehler auf die Position, selbst bei der ungünstigen Geometrie am Anfang, unter einem Fehlerwert von 25 cm. Gegenüber dem derzeitigen Stand der Technik, dem Carrier-Smoothed-Code, wird die Genauigkeit deutlich gesteigert.

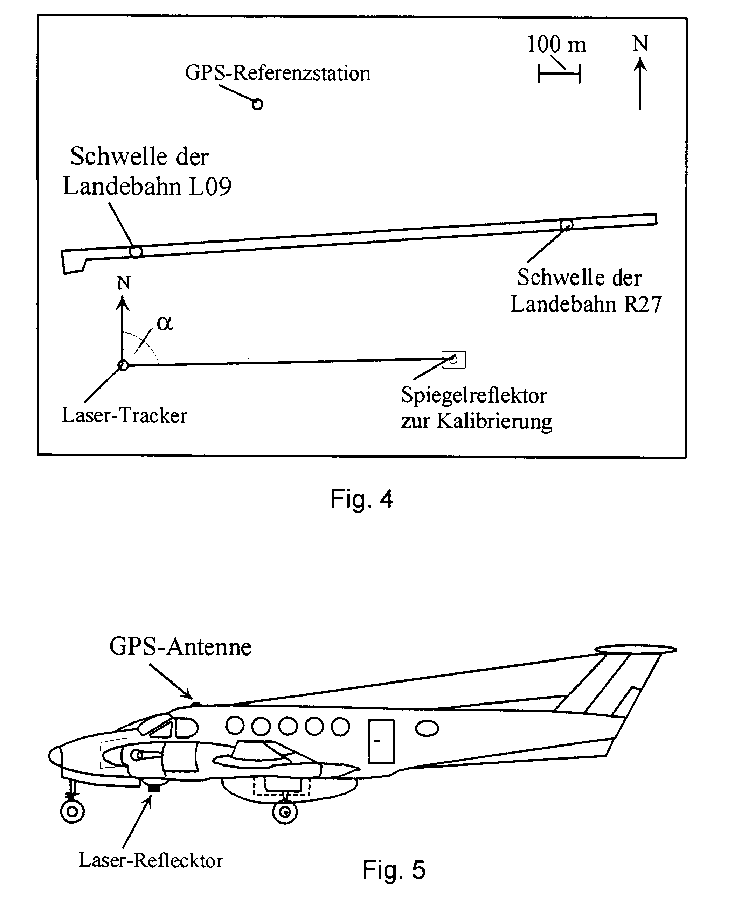

Die zweite Prüfung wurde durch einen Flugversuch mit einem sogenannten Laser-Tracker (Laser-Entfernungsmesser) als absolute Referenz durchgeführt. Mit dem Laser-Tracker ist die dreidimensionale Position eines Laser-Spiegelreflektors bestimmbar. FIG. 4 zeigt die Standorte der GPS-Referenzstation und des Laser-Trackers, die vor dem Flugversuch bereits hochgenau in dem Koordinatensystem WGS84 vermessen worden sind. An einem Testflugzeug, z.B. einem zweimotorigem Propellerflugzeug, wurden ein Laser- Spiegelreflektor des Laser-Trackers und die GPS-Antenne, wie in FIG. 5 veranschaulicht, angebracht. Der Laser-Tracker kann ein Lasersignal zu dem am Flugzeug angebrachten Reflektor ausstrahlen. Durch den Empfang des reflektierten Lasersignals werden der Peilwinkel und die Entfernung (der Laufzeit des Laser-Signals entsprechend) zwischen dem Laser-Tracker und dem Spiegelreflektor bestimmt. Die Mepgenauigkeiten des verwendeten Laser-Trackers sind in folgender Tabelle 2 dargestellt:

| Meßgröße | Genauigkeit | Auflösung |
|---|---|---|
| Elevation | 0,01° | 0,001° |
| Azimut | 0,01° | 0,001° |
| Entfernung | 0,15 m $\pm$ 5·10$^{-6}$·Entfernung | 0,01 m |

Vor dem Flugversuch wurde der Laser-Tracker anhand eines an dem sogenannten Tower des Flughafens angebrachten (Eich-)Spiegelreflektors kalibriert (geeicht) (FIG. 4). Diese Kalibrierung kann jedoch aufgrund der in Tabelle 2 dargestellten Mepgenauigkeiten einen Offset (Versatz) innerhalb der Genauigkeitstoleranz aufweisen. Besteht z.B. ein Kalibrierungsfehler von 0,01° im Elevationswinkel, so bewirkt dieser Fehler einen vertikalen Fehler von ungefähr 0,22 m an der Landebahnschwelle R27 (Entfernung zwischen der Landebahnschwelle und dem Laser-Tracker : ungefähr 1250 m).

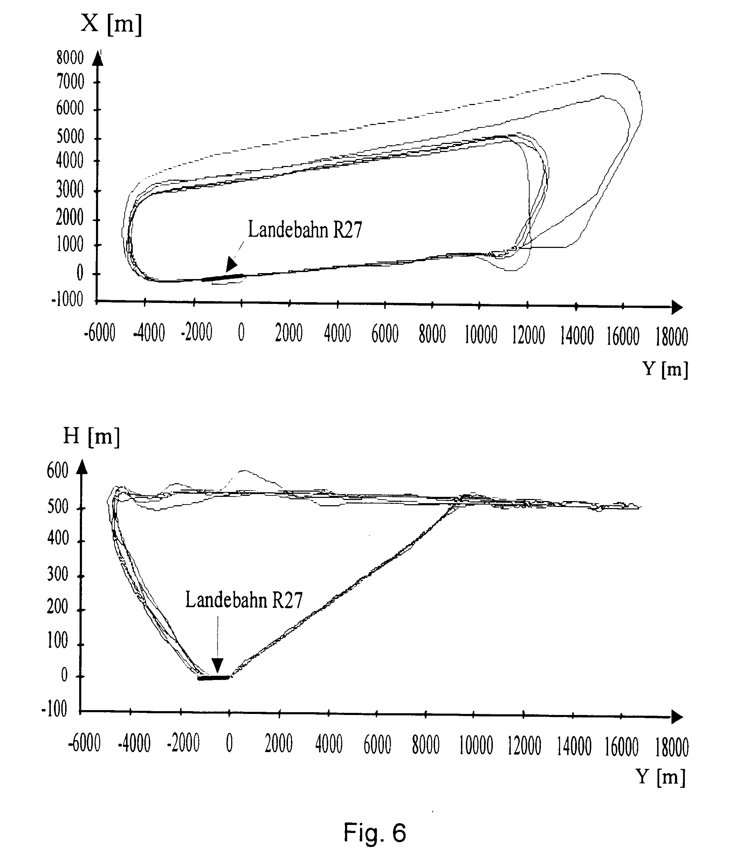

Bei dem Flugversuch wurden zwei GPS-Empfänger mit 10 Empfangskanälen verwendet. Die Antenne des Bodenempfängers (Referenz-Empfängers) befand sich auf dem in Fig. 4 dargestellten Referenzpunkt. Es wurden sechs Anflüge mit verschiedenen Einfädelswinkeln (intercept angles) durchgeführt. FIG. 6 zeigt dazu die Trajektorien der sechs Platzrunden in der horizontalen und der vertikalen Ebene.

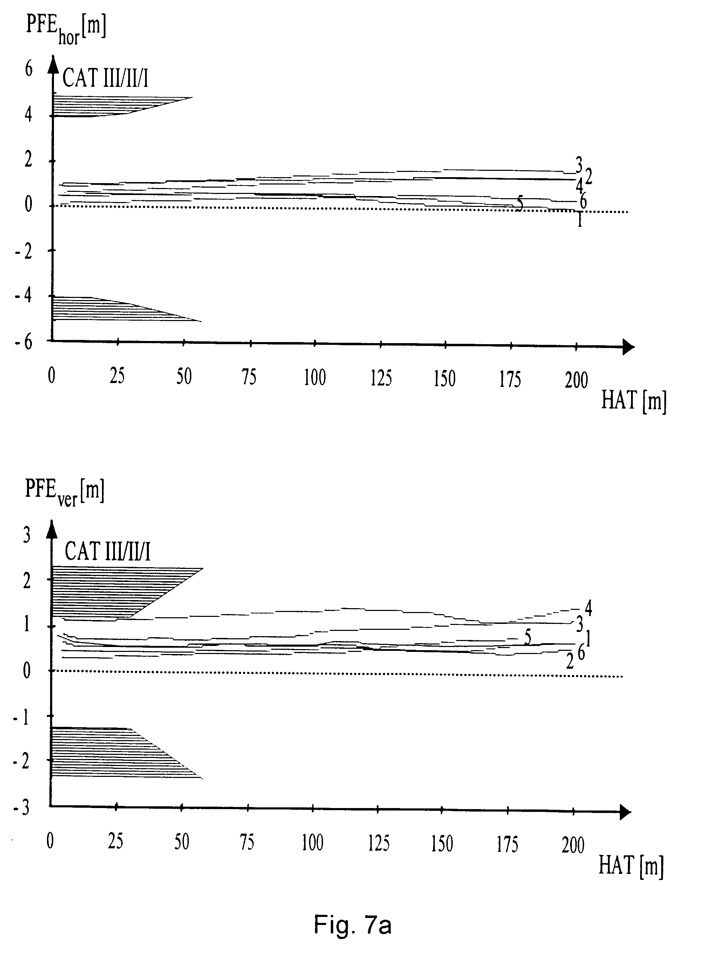

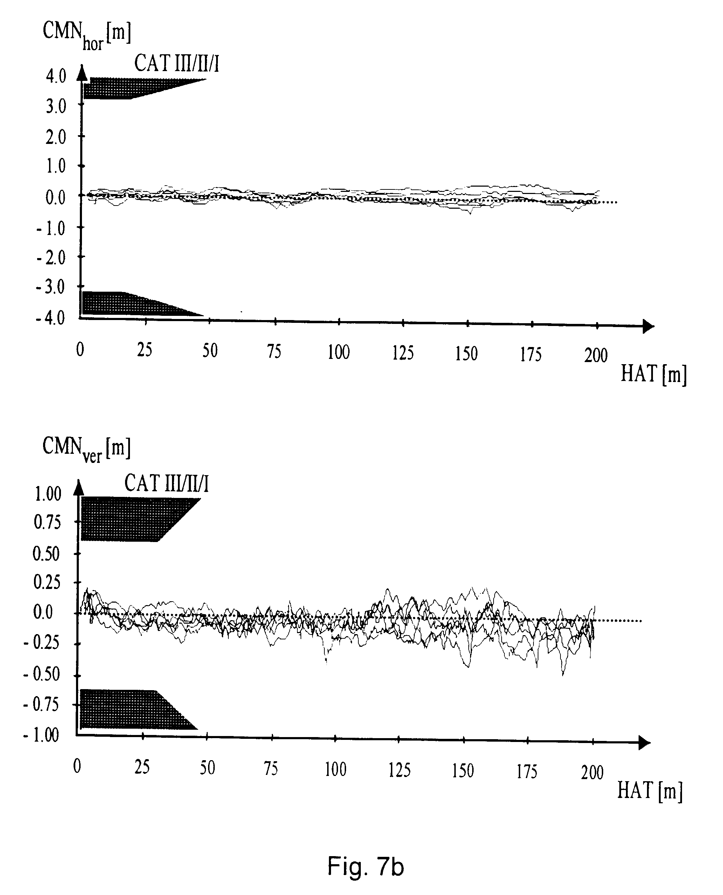

Die sechs Anflüge werden sowohl mit den GPS-Meßdaten unter Verwendung vom TD6U-Verfahren als auch mit den Meßdaten des Laser-Trackers ausgewertet. Die beiden Ergebnisse werden miteinander bei den Landephasen verglichen. FIG. 7 zeigt die PFE- und CMN-Fehler aus dem Vergleich der TD6U-Ergebnisse mit den Laser-Tracker-Ergebnissen bei den Endphasen der Landungen. Bei fünf von sechs Anflügen sind die Auswertungen mit dem TD6U-Verfahren aufgrund der Abschattungen einiger Satellitensignale bei jeweiligem Kurvenflug (Anzahl der empfangenen Satellitensignale kleiner 7) erst zu einem Zeitpunkt von 4 bis 6 Minuten vor der Landung möglich. Obwohl die Geometriebedingungen infolge der kurzen Zeitspannen ungünstig sind und der Fehler der Laser-Tracker-Messung mit berücksichtigt werden muß, erfüllen die Vergleichsergebnisse aller sechs Anflüge die Anforderungen der Präzisionsanflüge. Die Anforderungen der CAT I-bis CAT III - Bedingungen sind zur Beurteilung der Ortungsgenauigkeiten ebenfalls eingetragen. Die folgende Tabelle 3 faßt die PFE-Fehler aller Anflüge bei Höhen über der Landebahnschwelle (HAT) von 50 ft und 100 ft (Entscheidungshöhe für CAT III und II) durch die Angabe des Mittelwertes und der Streuung zusammen:

| HAT | Y-Mittelwert | Y-Streuung | H-Mittelwert | H-Streuung |
|---|---|---|---|---|
| 50 ft | 0,66 m | 0,21 m | 0,61 m | 0,26 m |
| 100 ft | 0,71 m | 0,22 m | 0,62 m | 0,27 m . |

Dabei bedeuten

HAT (Height Above Threshold), die Höhe über der Landebahnschwelle (Entscheidungshöhe) in foot (ft) (Fuß)

Y die Querrichtung zur Landebahn

H die vertikale Richtung.

Zur Erstellung einer Referenz wurde die dreidimensionale Lage der Landebahn mit dem Laser-Tracker hochgenau vermessen. Durch Verwendung des Tiefpaßfilters für die Anfangsposition und der anschließenden LSQ-Lösung mit drei Unbekannten (Fig. 2) werden die hochfrequenten Fehleranteile der Anfangsposition auf den Zentimeterbereich verringert.

Die in FIG 7 dargestellten CMN-Fehler enthalten im wesentlichen die hochfrequenten Fehler des Laser-Trackers.

Zur dritten Prüfung wurde die vermessene Landebahn benutzt. Um die TD6U-Ortungsgenauigkeit unter den dynamischen Bedingungen zu prüfen, bietet auch das Höhenprofil der Landebahn eine absolute Referenz. Das Höhenprofil der Landebahn wurde durch einen Rollversuch mit derselben Meßausrüstung zwischen den Punkten der Landebahnschwellen L09 und R27 vermessen. Die Vermessungsgenauigkeit enthielt einen Fehler kleiner als 10 cm.

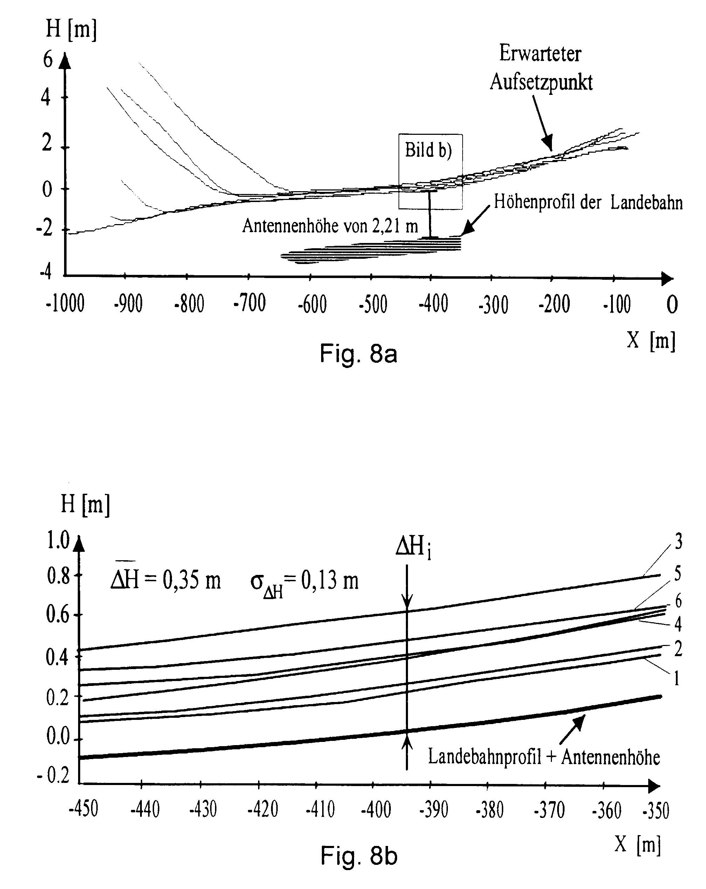

In FIG. 8 a) werden die Höhentrajektorien aller sechs Anflüge im Landebahnbereich eingetragen. Der vom Pilot angestrebte Aufsetzpunkt liegt dabei im Bereich von ungefähr 150 bis 180 m hinter der Landebahnschwelle R27. Die GPS-Antenne wurde oberhalb des Flugzeugrumpfes befestigt (Fig. 5) und hat beim Stehen des Flugzeuges einen Abstand zur Bodenoberfläche von 2,21 m. Fig 8b) zeigt darüber hinaus einen Ausschnitt der Rollphase, bei welcher die Abweichungen gegenüber dem Sollprofil deutlicher zu erkennen sind. Aufgrund der besseren Genauigkeit des Referenzsystems im Vergleich zu dem Laser-Tracker sind die hier ermittelten Abweichungen kleiner als die Vergleichsergebnisse mit dem Laser-Tracker. Der Mittelwert der Höhendifferenzen gegenüber dem vermessenen Landebahnprofil beträgt 0,35 m und die Streuung 0,13 m. Der Mittelwert besteht aus einem TD6U-Offset (TD6U-Versatz), einem Vermessungsfehler der Landebahn und einem Operationsfehler bei der Antennenaufstellung der Referenzstation. Im Vergleich zu dem Mittelwert des vertikalen PFE-Fehlers (0,61 m bis 0,62 m) in Tabelle 3 ist der Mittelwert hier kleiner und die Differenz zwischen den beiden Ergebnissen entspricht der Genauigkeit des Laser-Trackers. Die Streuung hier ist, im Gegensatz zu den Vergleichsergebnissen mit dem Laser-Tracker, die reine Streuung des TD6U-Fehlers, da die Landebahn als die Referenz bei allen Messungen konstant bleibt. Die Differenz der Streuung gegenüber dem Ergebnis in Tabelle 3 entspricht der Meßstreuung des Laser-Trackers.

Mit dem beschriebenen Verfahren ist es möglich, ein auf dem Verfahren beruhendes Navigationssystem bei den Präzisionsanflügen einzuschalten. Dieses besitzt nach einer Anlaufzeit von ungefähr zwei Minuten einen Meßfehler im unteren Dezimeterbereich für die Navigation des Flugzeugs.

Somit sind die Genauigkeitsanforderungen bis zu CAT-III für eine automatische Landung erfüllt.

Die Erfindung ist nicht auf das beschriebene Ausführungsbeispiel beschränkt, sondern sinngemäß auf weitere hochgenaue kinematische Anwendungen zu übertragen, wie z.B. Photogrammetrie, Luftgravimetrie, Be- und Entladung in einem Hafengelände u.s.w.

Legende zu den Figuren 1 bis 8. Es zeigen

FIG. 1 Dreifache Differenzen zwischen zwei Empfängern, zwei Satelliten und zwei Zeitpunkten. Dabei bedeuten

$\underline{X}_F(t_0), \underline{X}_F(t)$ Position des Bordempfängers zum Zeitpunkt $t_0$ und $t$

FIG. 2 Blockschaltbild des TD6U-Verfahrens. Dabei bedeuten

$\underline{X}_{Sat}$ Vektor der Satellitenpositionen

$\underline{X}_R$ Antennenposition des Referenzempfängers

$\underline{\phi}_F, \underline{\phi}_R$ Vektor der Trägerphasemessungen des Bord- und des Referenzempfängers

$\underline{X}_F(t_0)$ durch TD6U ermittelte Anfangsposition des Bordempfängers

$\underline{X}_F^*(t_0)$ geschätzte Anfangsposition des Bordempfängers

$\hat{\underline{X}}_F(t_0)$ gefilterte Anfangsposition des Bordempfängers

$\underline{X}_F(t)$ Position des Bordempfängers zum Zeitpunkt t

$\underline{AX} = \underline{Z} - \underline{\varepsilon}$ Tripledifferenzengleichungen, wobei $\underline{A}$ die Geometriematrix ist, $\underline{X}$ der Zustandsvektor, $\underline{Z}$ der Meßvektor und $\underline{\varepsilon}$ der Vektor der Restfehler.

FIG. 3 Positionierung mit dem TD6U-Verfahren bei einer Standmessung auf zwei Vermessungspunkten. Dabei bedeuten dX, dY, dH : Abweichung in Nord-, Ost- und vertikaler Richtung

FIG.4 Standorte der GPS-Referenzstation und des Laser-Trackers:

|  | Breite [°] | Länge [°] | Höhe [m] |
|---|---|---|---|
| Schwelle R27 | 52,319806284 | 10,564011271 | 131,783 |
| Schwelle L09 | 52,318825245 | 10,546496411 | 126,234 |
| Referenzstation | 52,322412511 | 10,551039872 | 128,670 |
| Laser-Tracker | 52,316166451 | 10,546340591 | 125,794 |

FIG. 5 Einbauorte der GPS-Antenne und des Laser-Reflektors

FIG. 6 Trajektorien von fünf Platzrunden beim Flugversuch in der horizontalen und der vertikalen Ebene. Dabei bedeuten

X, Y, H    Koordinaten in Nord-, Ost- und Höhenrichtung mit der Landebahnschwelle R27 als Ursprung (0, 0, 0)

FIG. 7a), 7b) Vergleichsergebnisse zwischen TD6U und Laser-Tracker bei den Endphasen der Landungen

   Fig. 7a) PFE-Anteil (Path-Following-Error)
   Fig. 7b) CMN-Anteil (Control Motion Noise). Dabei bedeutet HAT (Height Above Threshold): Höhe über der Landebahnschwelle

FIG. 8a, 8b Höhenvergleiche mit dem Landebahnprofil (incl. Antennenhöhe)

   Fig. 8a Höhenspuren bei Landungen und Starten (touch and go)
   Fig. 8b Höhenspuren beim Rollen


Dabei bedeuten


H       Höhe der GPS-Antenne im Flugzeug bezüglich der Landebahnschwelle R27
$\Delta H_i$   Höhendifferenz der GPS-Antenne gegenüber der Höhe von Landebahnprofil + Antennenhöhe beim i-ten Anflug
X       Abstand zur Landebahnschwelle R27 auf der Center-Line .



**Patentansprüche**

1. Satelliten-Navigationsverfahren mit einem beweglichem Nutzer-Empfänger und einer Referenzstation, deren Position bekannt ist, wobei in dem Nutzer-Empfänger und der Referenzstation die von mehreren Satelliten ausgesandten Signale empfangen und ausgewertet werden und daraus die Position des Nutzer-Empfängers bestimmt wird, wobei

-    in dem Nutzer-Empfänger und der Referenzstation (Ref) die von mehreren Satelliten ($S_i$, $S_j$) und/oder äquivalenten Pseudo-Satelliten empfangenen Signale ausgewertet werden mittels einer Trägerphasenmessung gemäß der Formel

$$\phi_E^S = (1/\lambda) \cdot (R_E^S + \Delta R^S + \Delta R_E + \varepsilon_E^S) + N_E^S$$


   mit


   $\phi_E^S$    gemessene Trägerphase;
   $\lambda$    Wellenlänge des ausgesandten GNSS-Trägersignals;
   $R_E^S$    Geometrische Entfernung vom Satelliten zum Empfänger;
   $\Delta R^S$   zwischen Satelliten korrelierte Fehler;
   $\Delta R_E$   zwischen Empfängern korrelierte Fehler;
   $\varepsilon_E^S$    Fehler wie Mehrwegausbreitungs- sowie Dynamikeinflüsse;
   $N_E^S$    Phasenmehrdeutigkeit zu einem Anfangszeitpukt $t_0$ und

- aus den zu dem Anfangszeitpunkt ($t_0$) und einem aktuellen Zeitpunkt (t mit t > $t_0$) ermittelten Trägerphasen eine Triple-Differenz gebildet wird gemäß der Formel

$$\delta\overline{\nabla}\Delta\dot{\phi} = \left\{\left[\dot{\phi}'_{F}(t) - \dot{\phi}'_{R}(t)\right] - \left[\dot{\phi}^{j}_{F}(t) - \dot{\phi}^{j}_{R}(t)\right]\right\} - \left\{\left[\dot{\phi}'_{F}(t_0) - \dot{\phi}'_{R}(t_0)\right] - \left[\dot{\phi}^{j}_{F}(t_0) - \dot{\phi}^{j}_{R}(t_0)\right]\right\}$$

mit

| | |
|---|---|
| $\phi$ | Trägerphase, |
| $\Delta$ | die in eckigen Klammern dargestellte Differenz, |
| $\nabla$ | die in geschweiften Klammern dargestellte Differenz, |
| $\delta$ | die Differenz zwischen den geschweiften Klammern |
| t | den aktuellen Zeitpunkt, |
| $t_0$ | den Anfangszeitpunkt, |
| $\phi^i_R(t)$ | die zum Zeitpunkt t an der Referenzstation Ref gemessene Trägerphase des Satelliten $S_i$, |
| $\phi^i_F(t)$ | die zum Zeitpunkt t an dem Nutzerempfänger F gemessene Trägerphase des Satelliten $S_i$, |
| $\phi^j_R(t)$ | die zum Zeitpunkt t an der Referenzstation Ref gemessene Trägerphase des Satelliten $S_j$, |
| $\phi^j_F(t)$ | die zum Zeitpunkt t an dem Nutzerempfänger F gemessene Trägerphase des Satelliten $S_j$, |
| $\phi^i_R(t_0)$ | die zum Anfangszeitpunkt $t_0$ an der Referenzstation Ref gemessene Trägerphase des Satelliten $S_i$, |
| $\phi^i_F(t_0)$ | die zum Anfangszeitpunkt $t_0$ an dem Nutzerempfänger F gemessene Trägerphase des Satelliten $S_i$, |
| $\phi^j_R(t_0)$ | die zum Anfangszeitpunkt $t_0$ an der Referenzstation Ref gemessene Trägerphase des Satelliten $S_j$, |
| $\phi^j_F(t_0)$ | die zum Anfangszeitpunkt $t_0$ an dem Nutzerempfänger F gemessene Trägerphase des Satelliten $S_j$, dadurch gekennzeichnet, |

- daß aus der Tripledifferenz die Positionen des Nutzerempfängers zu den Zeitpunkten t und $t_0$ durch eine analytische Methode mit mindestens sechs um einen Schätzpunkt linearisierten Tripledifferenzengleichungen bestimmt werden, wobei die Position des Nutzer-Enpfängers zu einem Anfangszeitpunkt ($t_0$) aufgrund ihrer zeitlich unveränderten Charakteristik statistisch ausgewertet wird,

die anhand der Positionslösung mit sechs Unbekannten ermittelten Werte der Position zum Anfangszeitpunkt ($t_0$) durch eine Tiefpaßfilterung geglättet werden,
die statistisch ausgetwertete Position des Nutzerempfängers zu dem Anfangszeitpunkt ($t_0$) als bekannte Position in die Beobachtungsgleichungen eingesetzt wird und
dann zu einem vorgebbarem aktuellen Zeitpunkt (t) lediglich die aktuelle Position des Nutzer-Empfängers ermittelt wird.

2. Satelliten-Navigationsverfahren nach Anspruch 1, dadurch gekennzeichnet,

- daß in der Referenzstation (Ref) ein Phasenkorrekturwert $\phi_{Korr}(t)$ ermittelt wird gemäß der Formel

$$\phi_{Korr}(t) = [R^i_R(t) - R^i_R(t_{Anf})] - \lambda[\phi^i_R(t) - \phi^i_R(t_{Anf})]$$

mit

| | |
|---|---|
| $t_{Anf}$ | Anfangszeitpunkt an der Referenzstation, |
| $\lambda$ | Wellenlänge des ausgesandten GNSS-Signals, |
| $R^i_R(t)$ | Geometrische Entfernung von dem Satelliten $S_i$ zu der Referenzstation zum Zeitpunkt t, |
| $R^i_R(t_{Anf})$ | Geometrische Entfernung von dem Satelliten $S_i$ zu der Referenzstation zum Zeitpunkt $t_{Anf}$ |
| $\phi^i_R(t)$ | zum Zeitpunkt t an der Referenzstation Ref gemessene Trägerphase des Satelliten $S_i$, |
| $\phi^i_R(t_{Anf})$ | zum Zeitpunkt $t_{Anf}$ an der Referenzstation Ref gemessene Trägerphase des Satelliten $S_i$, |

- daß der Phasenkorrekturwert mittels einer Datenübertragungsstrecke dem Nutzerempfänger übermittelt wird,

- daß in den Nutzerempfänger die dort ermittelte Trägerphase in Abhängigkeit von dem Phasenkorrekturvert korrigiert wird und

- daß aus der korrigierten Trägerphase die Positon des Nutzerempfängers bestimmt wird.

3. Satelliten-Navigationsverfahren nach einem der vorhergehenden Ansprüche, dadurch gekennzeichnet, daß für die Bestimmung der Anfangsposition des Nutzer-Empfängers ein Schätzwert verwendet wird.

4. Satelliten-Navigationsverfahren nach einem der vorhergehenden Ansprüche, dadurch gekennzeichnet, daß der Nutzer-Empfänger an einem Luftfahrzeug angebracht wird.

5. Satelliten-Navigationsverfahren nach einem der vorhergehenden Ansprüche, dadurch gekennzeichnet, daß als Landehilfe für Flugzeuge in der Nähe einer Landebahn mindestens eine ortsfeste Referenzstation (Ref) mit bekannter Position eingerichtet wird.

6. Satelliten-Navigationsverfahren nach einem der vorhergehenden Ansprüche, dadurch gekennzeichnet, daß zusätzlich zu der Referenzstation (Ref) in der Nähe der Landebahn mindestens eine Pseudo-Satellitenstation eingerichtet wird.

## Claims

1. Satellite navigation method with a movable user-receiver and a reference station, the position of which is known, wherein the signals emitted by several satellites are received and evaluated in the user-receiver and the reference station and the position of the user-receiver is determined therefrom, wherein

- the signals received from several satellites ($S_i$, $S_j$) and/or equivalent pseudosatellites are evaluated in the user-receiver and the reference station (Ref) by means of a carrier phase measurement in accordance with the formula

$$\phi_E^S = (1/\lambda)\cdot(R_E^S + \Delta R^S + \Delta R_E + \varepsilon_E^S) + N_E^S$$

wherein

$\phi_E^S$    is a measured carrier phase;

$\lambda$    is the wavelength of the emitted GNSS carrier signal;

$R_E^S$    is the geometric distance of the satellite from the receiver;

$\Delta R^S$    is the error correlated between satellites;

$\Delta R_E$    is the error correlated between receivers;

$\varepsilon_E^S$    is the error such as multichannel propagation influences and dynamic influences;

$N_E^S$    is the phase ambiguity at a start instant $t_0$

and a triple difference is formed from the carrier phases, which are determined at the start instant ($t_0$) and an actual instant (t, wherein t is greater than $t_0$), according to the formula

$$\overline{o}V\Delta\phi = \{[\phi_F^i(t)-\phi_R^i(t)]-[\phi_F^j(t)-\phi_R^j(t)]\}-\{[\phi_F^i(t_o)-\phi_R^i(t_o)]-[\phi_F^j(t_o)-\phi_R^j(t_o)]\}$$

wherein

$\phi$ is the carrier phase,

$\Delta$ is the difference represented in the square brackets,

$\nabla$ is the difference represented in the braces,

$\delta$ is the difference between the braces,

$t$ is the actual instant,

$t_0$ is the start instant

$\phi_R^i(t)$ is the carrier phase, which is measured at the instant t at the reference station Ref, of the satellite $S_i$,

$\phi_F^i(t)$ is the carrier phase, which is measured at the instant t at the user-receiver F, of the satellite $S_i$,

$\phi_R^j(t)$ is the carrier phase, which is measured at the instant t at the reference station Ref, of the satellite $S_j$,

$\phi_F^j(t)$ is the carrier phase, which is measured at the instant t at the user-receiver F, of the satellite $S_j$,

$\phi_R^i(t_o)$ is the carrier phase, which is measured at the instant $t_o$ at the reference station Ref, of the satellite $S_i$,

$\phi_F^i(t_o)$ is the carrier phase, which is measured at the instant $t_o$ at the user-receiver F, of the satellite $S_i$,

$\phi_R^j(t_o)$ is the carrier phase, which is measured at the instant $t_o$ at the reference station Ref, of the satellite $S_j$,

$\phi_F^j(t_o)$ is the carrier phase, which is measured at the instant to at the user-receiver F, of the satellite $S_j$,

characterised thereby that the positions of user-receiver at the instants t and $t_0$ are determined from the triple difference by an analytical method with at least six triple difference equations linearised about an estimation point, wherein the position of the user-receiver at a start instant ($t_0$) is statically evaluated on the basis of its characteristic unchanged in terms of time, the values, which are determined on the basis of the position solution with six unknowns, of the position at the start instant ($t_0$) are smoothed by a lowpass filter, the statically evaluated position of the user-receiver at the start instant ($t_0$) is inserted, as a known position, into the observation equation and then merely the actual position of the user-receiver is determined at a predeterminable actual instant (t).

2. Satellite navigation method according to claim 1, characterised thereby

- that a phase correction value $\phi_{Korr}(t)$ is determined in the reference station (Ref) according to the formula

$$\phi_{Korr}(t) = [R_R^i(t) - R_R^i(t_{Anf})] - \lambda[\phi_R^i(t) - \phi_R^i(t_{Anf})]$$

wherein

$t_{Anf}$ is the start instant at the reference station,

$\lambda$ is the wavelength of the emitted GNSS signal,

$R_R^i(t)$ is the geometric distance from the satellite $S_i$ to the reference station at the instant t,

$R_R^i(t_{Anf})$ is the geometric distance from the satellite $S_i$ to the reference station at the instant $t_{Anf}$,

$\phi_R^i(t)$ is the carrier phase, which is measured at the instant t at the reference station Ref, of the satellite $S_i$,

$\phi_R^i(t_{Anf})$ is the carrier phase, which is measured at the instant $t_{Anf}$ at the reference station Ref, of the

satellite $S_i$,

- that the phase correction is determined by means of a data transmission path to the user-receiver,

- that the carrier phase determined there in the user-receiver is corrected in dependence on the phase correction value, and

- that the position of the user-receiver is determined from the corrected carrier phase.

3. Satellite navigation method according to one of the preceding claims, characterised thereby that an estimation value is used for the determination of the start position of the user-receiver.

4. Satellite navigation method according to one of the preceding claims, characterised thereby that the user-receiver is mounted at an aircraft.

5. Satellite navigation method according to one of the preceding claims, characterised thereby that at least one stationary reference station (Ref) of known position is set up, as a landing aid for aircraft, in the vicinity of a landing path.

6. Satellite navigation method according to one of the preceding claims, characterised thereby that at least one pseudo-satellite station is set up additionally to the reference station (Ref) in the vicinity of the landing path.


**Revendications**

1. Procédé de navigation par satellites comportant un récepteur d'utilisateur mobile et une station de référence, dont la position est connue, dans le récepteur de l'utilisateur et la station de référence, les signaux émis par plusieurs satellites sont reçus et évalués et ensuite la position du récepteur de l'utilisateur est déterminée,

- dans le récepteur de l'utilisateur et la station de référence (Ref), les signaux reçus de plusieurs satellites ($S_i$, $S_j$) et/ou de pseudo-satellites équivalents sont évalués au moyen d'une mesure de phases porteuses selon la formule

$$\Phi_E^S = (1/\lambda) \cdot (R_E^S + \Delta R^S + \Delta R_E + \varepsilon_E^S) + N_E^S$$

avec

$\Phi_E^S$ est la phase porteuse mesurée ;
$\lambda$ est la longueur d'onde du signal de porteuse GNSS émis;
$R_E^S$ est la distance géométrique des satellites au récepteur;
$\Delta R^S$ sont des erreurs corrélées entre satellites, par exemple des erreurs d'horloge de récepteur ;
$\Delta R_E$ sont des erreurs corrélées entre récepteurs, par exemple des erreurs de paramètres d'éphémérides et d'horloges de satellites ainsi que de l'ionosphère et de la troposphère ;
$\varepsilon_E^S$ sont des erreurs comme des influences de propagation à voies multiples, influences de dynamique et bruits ;
$N_E^S$ est la forme multiple de phases à un instant initial $t_0$ et

- à partir des phases porteuses détectées à l'instant initial ($t_0$) et à un instant réel (t avec $t > t_0$), est formée une différence triple selon la formule

$$\delta \nabla \triangle \Phi = \{[\Phi_F^i (t) - \Phi_R^i) (t)] - [\Phi_F^j (t) - \Phi_R^j (t)]\}$$

$$- \{[\Phi_F^i (t_0) - \Phi_R^i (t_0)] - [\Phi_F^j (t_0) - \Phi_R^j (t_0)]\}$$

avec

$\Phi$ phase porteuse

$\Delta$ désigne la différence représentée entre crochets,

$\nabla$ représente la différence indiquée entre accolades,

$\delta$ est la différence entre les accolades,

t temps réel

$t_0$ temps initial

$\Phi_R^i(t)$ représente la phase porteuse du satellite $S_i$ mesurée à l'instant t à la station de référence Ref,

$\Phi_F^i(t)$ représente la phase porteuse du satellite $S_i$ mesurée à l'instant t sur le récepteur d'utilisateur F,

$\Phi_R^j(t)$ représente la phase porteuse du satellite $S_j$ mesurée à l'instant t à la station de référence Ref,

$\Phi_F^j(t)$ représente la phase porteuse du satellite $S_j$ mesurée à l'instant t sur le récepteur d'utilisateur F,

$\Phi_R^i(t_0)$ représente la phase porteuse du satellite $S_i$ mesurée à l'instant $t_0$ à la station de référence Ref,

$\Phi_F^i(t_0)$ représente la phase porteuse du satellite $S_i$ mesurée à l'instant $t_0$ sur le récepteur d'utilisateur F,

$\Phi_R^j(t_0)$ représente la phase porteuse du satellite $S_j$ mesurée à l'instant $t_0$ à la station de référence Ref,

$\Phi_F^j(t_0)$ représente la phase porteuse du satellite Sj mesurée à l'instant $t_0$ sur le récepteur d'utilisateur F,

- caractérisé en ce qu'à partir de la différence triple, les positions du récepteur d'utilisateur aux instants t et $t_0$ sont déterminées par un procédé analytique avec au moins six équations de différences triples linéarisées autour d'un point d'estimation,

la position du récepteur d'utilisateur à un instant initial ($t_0$) est évaluée statistiquement en fonction de sa caractéristique non modifiée temporellement,

les valeurs de la position détectées à l'aide de la solution de position à six inconnues à l'instant initial ($t_0$) sont lissées par filtrage passe-bas,

la position évaluée statistiquement du récepteur d'utilisateur à l'instant initial ($t_0$) en tant que position connue est introduite dans les équations d'observation et

ensuite à un instant réel (t) pouvant être prescrit, est détectée uniquement la position réelle du récepteur d'utilisateur.

2. Procédé de navigation par satellites selon la revendication 1, caractérisé

- en ce que, dans la station de référence (Ref), est détectée une valeur de correction de phase $\Phi_{corr}(t)$ selon la formule

$$\Phi_{corr}(t) = [R_R^i(t) - R_R^i(t_{Anf})] - \lambda[\Phi_R^i(t) - \Phi_R^i(t_{Anf})]$$

avec

$t_{Anf}$ temps initial à la station de référence,

$\lambda$ longueur d'onde du signal GNSS émis,

$R_R^i(t)$ distance géométrique du satellite $S_i$ à la station de référence à l'instant t,

$R_R^i(t_{Anf})$ distance géométrique du satellite $S_i$ à la station de référence à l'instant $t_{Anf}$,

$\Phi_R^i(t)$ phase porteuse du satellite $S_i$ mesurée à l'instant t à la station de référence Ref,

$\Phi_R^i(t_{Anf})$ phase porteuse du satellite $S_i$ mesurée à l'instant $t_{Anf}$ à la station de référence Ref,

- en ce que la valeur de correction de phase est transmise au moyen d'une voie de transmission de données au récepteur d'utilisateur,

- en ce que, dans le récepteur d'utilisateur, la phase porteuse ainsi détectée est corrigée en fonction de la valeur de correction de phase et

- en ce qu'à partir de la phase porteuse corrigée est déterminée la position du récepteur d'utilisateur.

3. Procédé de navigation par satellites selon l'une quelconque des revendications précédentes, caractérisé en ce que pour la détermination de la position initiale du récepteur de l'utilisateur, est utilisée une valeur estimée.

4. Procédé de navigation par satellites selon l'une quelconque des revendications précédentes, caractérisé en ce que le récepteur de l'utilisateur est embarqué sur un aéronef.

5. Procédé de navigation par satellites selon l'une quelconque des revendications précédentes, caractérisé en ce qu'en tant qu'auxiliaire d'atterrissage pour aéronefs est disposée à proximité d'une piste d'atterrissage au moins une station de référence fixe (Ref) de position connue.

6. Procédé de navigation par satellites selon l'une quelconque des revendications précédentes, caractérisé en ce qu'en plus de la station de référence (Ref), est disposée à proximité de la piste d'atterrissage au moins une station de pseudo-satellite.

$S_{i}(t_{0})$

$S_{i}(t)$

$S_{j}(t)$

$S_{j}(t_{0})$

$R_{F}^{i}(t_{0})$

$R_{R}^{j}(t_{0})$

$R_{R}^{i}(t_{0})$

$R_{F}^{j}(t_{0})$

F

$R_{R}^{i}(t)$

$R_{R}^{j}(t)$

$R_{F}^{j}(t)$

$R_{F}^{i}(t)$

F

$\underline{X}_{F}(t_{0})$

$\underline{X}_{F}(t)$

Ref

Data-Link

Fig. 1

$$\underline{X}_{Sat} \qquad \underline{X}_R$$

$$\phi_R$$

$$\phi_F$$

**Triple Differenz- bildung**

$$\underline{A}\underline{X} = \underline{Z} - \underline{\varepsilon}$$

**Least Square Algor.**

**6 Unbek.**

$$\underline{X}_F(t_o)$$

$$\underline{X}^*_F(t_o)$$

$$\Delta\underline{X}_F(t_o)$$

**Tiefpaß- filter**

$$\hat{\underline{X}}_F(t_o)$$

**Least Square Algor.**

**3 Unbek.**

$$\underline{X}_F(t)$$

$$\Delta\overline{\underline{X}}_F(t_o)$$

Fig. 2

1

Fig. 3

Fig. 4

Fig. 5

Fig. 6

Fig. 7a

Fig. 7b

H [m]

6

4

2

0

-2

-4

Erwarteter
Aufsetzpunkt

Bild b)

Antennenhöhe von 2,21 m

Höhenprofil der Landebahn

-1000  -900  -800  -700  -600  -500  -400  -300  -200  -100  0

X [m]

**Fig. 8a**

H [m]

1.0

0.8

0.6

0.4

0.2

0.0

-0.2

$\overline{\Delta H}$ = 0,35 m     $\sigma_{\Delta H}$ = 0,13 m

$\Delta H_i$

3

5

6

4

2

1

Landebahnprofil + Antennenhöhe

-450  -440  -430  -420  -410  -400  -390  -380  -370  -360  -350

X [m]

**Fig. 8b**